# EUROPÄISCHE PATENTSCHRIFT

(11) **EP 1 092 348 B1**
(45) Veröffentlichungstag und Bekanntmachung des Hinweises auf die Patenterteilung: **30.07.2003**
(21) Anmeldenummer: 00117636.1
(22) Anmeldetag: 16.08.2000
(51) Int. Cl.: A01M 17/00

(54) **Verfahren und Vorrichtung zum Entwesen von organischem Gut**
Process and apparatus for eradicating pests in organic bulk goods
Procédé et installation pour exterminer les vermines de matériaux en vrac

(30) Priorität: 14.10.1999 DE 19949660
(43) Veröffentlichungstag der Anmeldung: 18.04.2001
(73) Patentinhaber: MARTIN BAUER GMBH & CO. KG., D-91487 Vestenbergsgreuth (DE)
(72) Erfinder: Finkenzeller, Erwin, 91091 Grossenseebach (DE)
(74) Vertreter: Liesegang, Roland, Dr.-Ing.

(56) Entgegenhaltungen:
- EP-A- 0 458 359
- DE-A- 19 540 331
- DE-A- 19 708 669

## Beschreibung

Die Erfindung betrifft ein Verfahren und eine Vorrichtung zum Entwesen von organischem Gut mit den Merkmalen des Oberbegriffs des Patentanspruchs 1.

Ein derartiges Verfahren ist aus der EP 0458 359 B1 bekannt. Dort wird zwar schon Behandlungsgas, das zur Behandlung in dem einen Entwesungsbehälter benutzt worden ist, teilweise durch erneutes Verdichten auf Entwesungsdruck und Überleiten in den anderen Entwesungsbehältern wieder verwendet. Während des Entladens von behandeltem Gut und des Beschikkens mit noch zu behandelndem Gut sind die Entwesungsbehälter jedoch dem Zutritt von Umgebungsluft ausgesetzt, so daß sich diese mit dem Behandlungsgas mischt, das seinerseits zum Teil in die Umgebung austritt. Dies hat zwei Nachteile:
- zum einen muß für jeden neuen Entwesungsvorgang Behandlungsgas in den betreffenden Entwesungsbehälter nachgefüllt werden, um die für eine zuverlässige Entwesung erforderliche Konzentration an Behandlungsgas aufrecht zu erhalten. Dies geschieht über einen sogenannten Vorlagebehälter.
- zum anderen ist das Entweichen von Behandlungsgas, das im wesentlichen aus Kohlendioxid (CO₂) besteht, umweltschädlich.

Der Erfindung liegt die Aufgabe zugrunde, ein Verfahren und eine Vorrichtung der beschriebenen Art so auszugestalten, daß das Behandlungsgas annähernd vollständig wieder verwendbar wird und ein Entweichen von Behandlungsgas in die Umgebung vermieden ist.

Zur Lösung dieser Aufgabe dienen ein Verfahren nach Patentanspruch 1 und eine Vorrichtung nach Patentanspruch 5.

Dadurch, daß das Entladen von behandeltem Gut und das Beladen mit zu behandelndem Gut in einer Atmosphäre aus Behandlungsgas ohne die Möglichkeit des Zutritts von Umgebungsluft vorgenommen wird, ist erstmals eine vollständige Wiederverwendbarkeit des Behandlungsgases bei einem neuerlichen Entwesungsvorgang ermöglicht. Das Entweichen von Behandlungsgas in die Umgebung läßt sich auch ohne besondere Abdichtungsmaßnahmen aufgrund der Tatsache verhindern, daß das vorzugsweise im wesentlichen aus Kohlendioxid (CO₂) bestehende Behandlungsgas schwerer als Luft ist, indem die Entladungs/Beschickungsöffnung für das zu behandelnde Gut an die Oberseite des Entwesungsbehälters selbst oder eines Behälters dafür gelegt ist, welcher mit dem unter Umgebungsdruck stehenden Behandlungsgas füllbar ist.

Es ist ersichtlich, daß bei der Erfindung ein Vorlagebehälter, aus dem nach jedem Behandlungsvorgang Behandlungsgas in den betreffenden Entwesungsbehälter nachzuschiessen ist, nicht mehr erforderlich ist. Zweckmäßig ist jedoch, wenn ein Lagertank an die Versorgungsleitungen zur Erstbefüllung und zum Ausgleich von in der Praxis nicht auszuschließenden, geringfügigen Leckagen an Behandlungsgas an die Vorrichtung angeschlossen ist.

Weitere Ausgestaltungen der Erfindung sind in den weiteren Unteransprüchen unter Schutz gestellt.

Die Erfindung ist im folgenden anhand schematischer Zeichnungen an Ausführungsbeispielen mit weiteren Einzelheiten näher erläutert.

Es zeigen:
- Figur 1: ein Blockschaltbild mit den Baugruppen und Leitungsführungen einer Vorrichtung gemäß der Erfindung;
- Figur 2: eine Draufsicht auf einen Horizontalschnitt durch einen mit zwei Entwesungsbehältern sowie einer Entladungs-/Beschickungsvorrichtung gefüllten Behälter, der mit Behandlungsgas füllbar ist;
- Figur 3: einen Querschnitt durch den Behälter nach Figur 2 im vergrößertem Maßstab nach der Linie III-III in Figur 2.

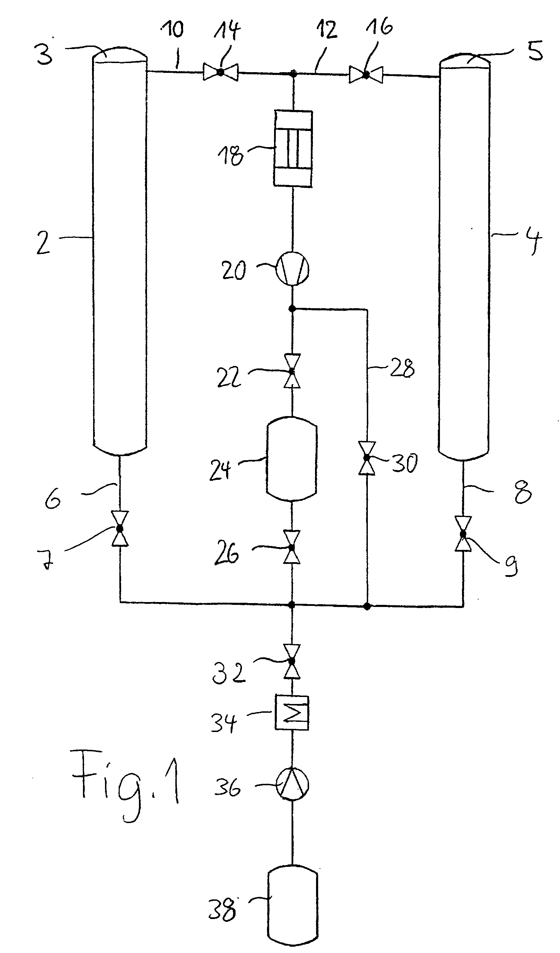

In Figur 1 sind mit den Bezugszahlen 2 und 4 zwei als Entwesungsbehälter eingesetzte Autoklaven bezeichnet. Diese Autoklaven werden je über eine Versorgungsleitung 6,8 mit Behandlungsgas gefüllt. An den in Figur 1 oberen Enden haben die Autoklaven öffenbare abdichtende Deckel 3,5 zum Entladen und Beschicken mit Behandlungsgut. Im Bereich dieser Enden sind Auslassleitungen 10,12 an die Autoklaven angeschlossen, die über Ventile 14,16 und einen Filter 18 mit der Ansaugseite eines Verdichters 20 verbindbar sind. Der Verdichter 20 ist über ein Ventil 22 mit einem Zwischenbehälter 24 für mindestens auf Entwesungsdruck verdichtetes Behandlungsgas verbindbar, der seinerseits über ein Ventil 26 mit den Versorgungsleitungen 6,8 für die Entwesungsbehälter verbindbar ist. In der Praxis kann der Druck im Zwischenbehälter bei 40 bar liegen.

Alternativ kann der Verdichter 20 über eine Bypassleitung 28 mit eingebautem Ventil 30 direkt unter Umgehung des Zwischenbehälters 24 auf die Versorgungsleitungen 6,8 wirken.

Die Versorgungsleitungen sind über ein Ventil 32, einen Verdampfer 34 und eine Pumpe 36 an einen Lagertank 38 für Behandlungsgas anschließbar.

Die Vorrichtung arbeitet wie folgt:

Nach Vollenden einer Behandlung in dem Entwesungsbehälter 4 steht dieser noch unter Behandlungsdruck von z.B. 20 bar, während der Entwesungsbehälter 2, der mit frischem Behandlungsgut beschickt worden ist, drucklos ist. Die Ventile 14 und 16 werden geöffnet, so daß Behandlungsgas über die Leitungen 10, 12 aus dem Entwesungsbehälter 4 in den Entwesungsbehälter 2 so lange überströmt, bis ein Druckausgleich auf einen gemeinschaftlichen Druck von circa 10 bar erzielt ist. Nach Schließen der Ventile 14, 16 und Öffnen der Ventile 7 und 26 wird Behandlungsgas aus dem Zwischenbehälter 24, in welchem ein Druck deutlich über 20 bar herrscht, in den Entwesungsbehälter 2 gefördert, bis der gewünschte Entwesungsdruck von etwa 20 bar im Entwesungsbehälter 2 herrscht. Daraufhin werden die Ventile 7 und 26 gesperrt, so daß das im Entwesungsbehälter 2 befindliche Gut für eine vorbestimmte Zeitspanne, beispielsweise einige Stunden, der Wirkung des unter Entwesungsdruck stehenden Behandlungsgases ausgesetzt ist. Gleichzeitig wird das Ventil 16 wieder geöffnet und mittels des Verdichters 20 Restgas aus dem Entwesungsbehälter in den Zwischenbehälter 24 gefördert, so daß dort der Druck wieder deutlich über den Entwesungsdruck von 20 bar erhöht wird. Nach Ablauf der Entwesungszeitspanne wird auch das Ventil 14 wieder geöffnet, so daß Behandlungsgas aus dem Entwesungsbehälter 2 in den Entwesungsbehälter 4 solange überströmt, bis ein Druckausgleich auf einen gemeinschaftlichen Druck von 10 bar erzielt ist. Nach Schließen der Ventile 14, 16 und Öffnen der Ventile 9 und 26 wird Behandlungsgas aus dem Zwischenbehälter 24 in den Entwesungsbehälter 4 gefördert, bis der gewünschte Behandlungsdruck darin erreicht ist. Darauf werden die Ventile 9 und 26 gesperrt und die Entwesung im Behälter 4 durchgeführt und so fort.

Anstatt aus dem Zwischenbehälter 24 kann noch benötigtes Behandlungsgas auch über die Bypass-Leitung 28 in den jeweils zu verwendenden Entwesungsbehälter 2 oder 4 nachgeschoben werden, wobei dann das Ventil 30 geöffnet ist.

Für den neuerlichen Entwesungsvorgang im jeweiligen Entwesungsbehälter 2 oder 4 sind dann wieder sämtliche Ventile zu sperren.

Nur für die Erstbefüllung oder zum Ausgleichen von gelegentlichen Leckagen wird nach Öffnen des Ventils 32 frisches Behandlungsgas aus dem Lagerbehälter 38 über die Pumpe 36 und den Verdampfer 34 in den betreffenden Entwesungsbehälter 2 oder 4 nachgespeist.

Anstatt mittels eines ständig vorhandenen Lagerbehälters 38 kann Behandlungsgas über eine nur temporär nach Bedarf anzuschließende instationäre Behandlungsgasquelle in das System nachgespeist werden.

Anstatt von nur zwei Entwesungsbehältern 2,4 können auch mehrere, in entsprechender Weise geschaltete Entwesungsbehälter vorgesehen werden. Diese müssen nicht notwendig gleiches Fassungsvermögen aufweisen.

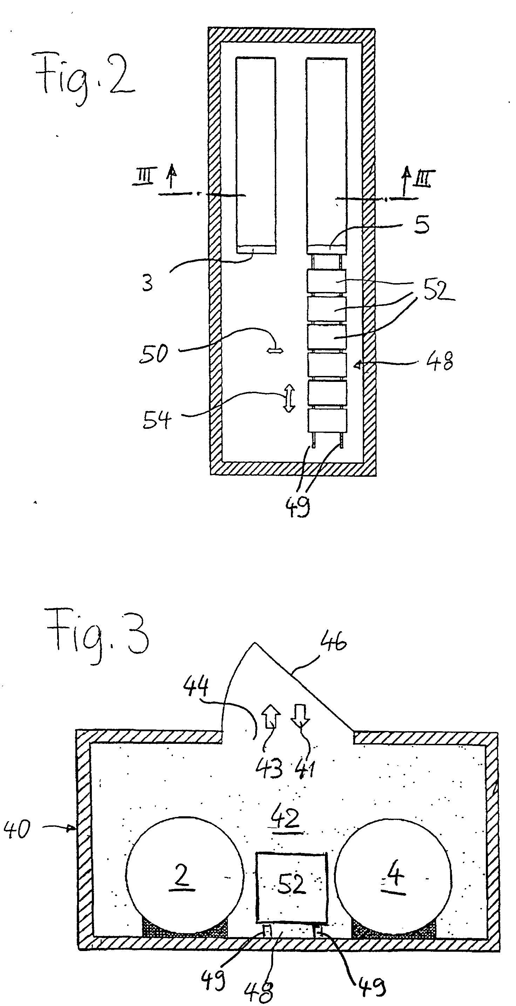

Bei der ausgeführten Vorrichtung gemäß den Figuren 2 und 3 sind die beiden Entwesungsbehälter 2,4 parallel und horizontal nebeneinander liegend in einem Behälter 40 untergebracht, dessen Innenraum 42 mit Behandlungsgas unter Umgebungsdruck gefüllt ist. Das Behandlungsgas besteht zum überwiegenden Teil aus Kohlendioxid (CO₂), das bekanntlich schwerer als Luft ist. Aus Figur 3 ist eine obere Entladungs- und Beschickungsöffnung 44 ersichtlich, die über eine Klappe 46 verschließbar ist.

Die beiden Entwesungsbehälter 2,4 sind wie in Figur 1 gezeigt und beschrieben míteinander verbunden und betreibbar, was in den Figuren 2 und 3 nicht dargestellt ist.

Aus Figur 2 ist eine Entlade-Beschickungsvorrichtung 48 ersichtlich, die in Querrichtung 50 zwischen den Beschickungsöffnungen mit den Deckeln 3,5 der Entwesungsbehälter 2,4 in Richtung des Pfeiles 50 hin- und her bewegbar ist. Auf Führungsschienen 49 der Vorrichtung 50 sind hintereinander aufgereiht Chargen 52 von zu entwesendem Gut dargestellt, die längs der Führungsschienen 49 in Richtung des Pfeiles 54 in die Entwesungsbehälter 2,4 hinein-, bzw. daraus wieder herausförderbar sind.

Die Vorrichtung 48 wird gemäß Figur 3 zum Einbringen, bzw. Ausbringen der Chargen 52 aus dem Behälter 40 in eine Position zwischen den Entwesungsbehältem 2, 4 gebracht, in der dann die Chargen 52 bei geöffnetem Deckel 46 über die Öffnung 44 in den Innenraum 42 des Behälters 40 in Richtung der Pfeile 41 bzw. 43 eingebracht, bzw. daraus ausgebracht werden können. Wenn der Behälter 40 ordnungsgemäß mit dem Behandlungsgas unter mindestens Umgebungsdruck gefüllt ist, kann auch bei geöffnetem Deckel 46 weder Behandlungsgas entweichen, noch kann Umgebungsluft eindringen, weil das Behandlungsgas schwerer als die Umgebungsluft ist.

Die Entwesungsbehälter 2,4 könnten auch mit vertikaler Längsrichtung aufgestellt werden (nicht gezeigt). In diesem Fall sind die mit den Deckeln 3 und 5 versehenen Enden oben anzuordnen. Ein dem Behälter 40 entsprechendes Bauteil ist dann entbehrlich; jedoch ist das Entladen und Beschicken der Entwesungsbehälter 2,4 hier aufwendiger.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Verfahren zum Entwesen von organischem Gut, wie Getreide, Früchte, Drogen und dergleichen, wechselweise in mindestens zwei druckfesten Entwesungsbehältern (2 oder 4) mittels eines unter Druck stehenden Behandlungsgases aus reinem oder mit einem anderen Gas versetztem Kohlendioxid, wobei das Behandlungsgas nach abgeschlossener Behandlung in dem einen Entwesungsbehälter (2 oder 4) in den anderen Entwesungsbehälter (4 oder 2) entspannt wird und in dem einen Entwesungsbehälter verbliebenes Restgas zumindest teilweise einem Verdichter (20) zugeführt und dort auf einen Druck von zumindest Entwesungsdruck verdichtet wird und einer Wiederverwendung in dem anderen Entwesungsbehälter zugeführt wird und wobei der eine Entwesungsbehälter nach vollendetem Druckausgleich entladen und neu mit zu entwesendem Frischgut beladen wird, **dadurch gekennzeichnet, daß** das Entladen und Beladen der Entwesungsbehälter (2,4) in einer Atmosphäre aus Behandlungsgas ohne Zutritt von Umgebungsluft erfolgt.

2. Verfahren nach Anspruch 1, **dadurch gekennzeichnet, daß** das die Entwesungsbehälter (2,4) umgebende Behandlungsgas unter Umgebungsdruck steht.

3. Verfahren nach Anspruch 1 oder 2, **dadurch gekennzeichnet, daß** das Entladen und Beladen des einen Entwesungsbehälters gleichzeitig mit dem Verdichten und Wiederauffüllen des anderen Entwesungsbehälters mit Behandlungsgas erfolgt.

4. Verfahren nach Anspruch 1 oder 2, **dadurch gekennzeichnet, daß** das Restgas in einen Zwischenbehälter (24) hinein verdichtet wird und daß das Wiederauffüllen des anderen Entwesungsbehälters mit Behandlungsgas zeitlich versetzt nach dem Entladen und Beladen des einen Entwesungsbehälters erfolgt.

5. Vorrichtung zum Durchführen eines Verfahrens nach einem der Ansprüche 1 bis 4, **dadurch gekennzeichnet, daß** die Entwesungsbehälter (2, 4) in einem mit Behandlungsgas unter Umgebungsdruck gefüllten Behälter (40) mit einer Entladungs-/ Beschikkungsöffnung (44) an der Oberseite untergebracht sind.

6. Vorrichtung zum Durchführen eines Verfahrens nach einem der Ansprüche 1 bis 4, **dadurch gekennzeichnet, daß** die Entwesungsbehälter (2, 4) mit zumindest teilweise vertikaler Ausrichtung ihrer Längsachse aufgestellt sind und Entladungs-/Beschikkungsöffnungen an ihren oberen Enden haben.

7. Vorrichtung nach einem der Ansprüche 5 oder 6, **dadurch gekennzeichnet, daß** dem Verdichter (20) ein Zwischenbehälter (24) für Behandlungsgas nachgeschaltet ist, von dem aus über Ventile (7, 9) sperrbare Versorgungsleitungen (6, 8) zu den Entwesungsbehältern (2, 4) führen.

8. Vorrichtung nach Anspruch 7, **dadurch gekennzeichnet, daß** eine Bypassleitung (28) zur Umgehung des Zwischenbehälters (24) vorgesehen ist.

9. Vorrichtung nach einem der Ansprüche 5 bis 8, **dadurch gekennzeichnet, daß** für die Erstbefüllung und zum Ausgleich von Leckage ein Lagertank (38) für Behandlungsgas an die Versorgungsleitungen (6, 8) anschließbar ist.

## Claims

1. A method of disinfestation of organic material, such as cereals, fruits, drugs, and the like by means of a pressurized treatment gas consisting of carbon dioxide, either pure or mixed with another gas, alternatingly in at least two pressure resistant disinfestation containers (2 or 4), the pressure of the treatment gas being released from one into the other of the disinfestation containers (2 or 4) upon completion of the treatment, and residual gas remaining in the one disinfestation container being supplied at least in part to a compressor (20) where it is compressed at least up to the disinfestation pressure and supplied to the other disinfestation container for renewed use, and the one disinfestation container being emptied upon completion of the pressure balancing and being charged again with fresh material for disinfestation, **characterized in that** the unloading and loading of the disinfestation containers (2, 4) takes place in a treatment gas atmosphere without access of ambient air.

2. A method as claimed in claim 1, **characterized in that** the treatment gas surrounding the disinfestation containers (2, 4) is at ambient pressure.

3. The method as claimed in claim 1 or 2, **characterized in that** the loading and unloading of the one disinfestation container takes place at the same time as the compression and the refilling of the other disinfestation container with treatment gas.

4. The method as claimed in claim 1 or 2, **characterized in that** the residual gas is compressed into an intermediate container (24), and **in that** the refilling of the other disinfestation container with treatment gas takes place, offset in time, after the unloading and loading of the one disinfestation container.

5. An apparatus for carrying out a method as claimed in any one of claims 1 to 4, **characterized in that** the disinfestation containers (2, 4) are housed in a container (40) which is filled with treatment gas at ambient pressure and has a discharge/feed opening (44) at the top.

6. An apparatus for carrying out a method as claimed in any one of claims 1 to 4, **characterized in that** the disinfestation containers (2, 4) are placed with their longitudinal axes at least partly in vertical alignment and that they include discharge/feed openings at their upper ends.

7. The apparatus as claimed in claim 5 or claim 6, **characterized in that** an intermediate container (24) for treatment gas is connected downstream of the compressor (20) and feed lines (6, 8) adapted to be blocked by valves (7, 9) lead from the intermediate container to the disinfestation containers (2, 4).

8. The apparatus as claimed in claim 7, **characterized in that** a bypass line (28) is provided to bypass the intermediate container (24).

9. The apparatus as claimed in any one of claims 5 to 8, **characterized in that** a storage tank (38) for treatment gas is adapted to be connected to the feed lines (6, 8) to accomplish the initial filling and balance any leakage loss.

## Revendications

1. Procédé pour exterminer les vermines de matériaux organiques en vrac, tels que des céréales, des fruits, des médicaments et similaires, alternativement dans au moins deux réservoirs d'extermination de vermine résistant à la pression (2 ou 4) à l'aide d'un gaz de traitement sous pression constitué de dioxyde de carbone pur ou mélangé à un autre gaz, le gaz de traitement étant détendu après le traitement dans le premier réservoir d'extermination de vermine (2 ou 4) dans l'autre réservoir d'extermination de vermine (4 ou 2) et le gaz restant dans le premier réservoir d'extermination de vermine étant au moins partiellement amené dans un compresseur (20) pour y être comprimé à une pression au moins égale à la pression d'extermination de vermine et être réutilisé dans l'autre réservoir d'extermination de vermine et le premier réservoir d'extermination de vermine étant déchargé après équilibrage de pression et chargé à nouveau de matériaux à débarrasser des vermines, **caractérisé en ce que** le déchargement et le chargement des réservoirs d'extermination de vermine (2, 4) se fait sous une atmosphère de gaz de traitement sans entrée d'air ambiant.

2. Procédé suivant la revendication 1, **caractérisé en ce que** le gaz de traitement entourant les réservoirs d'extermination de vermine (2, 4) est à pression ambiante.

3. Procédé suivant la revendication 1 ou 2, **caractérisé en ce que** le déchargement et le chargement d'un réservoir d'extermination de vermine a lieu en même temps que la compression et le nouveau remplissage de l'autre réservoir d'extermination de vermine avec du gaz de traitement.

4. Procédé suivant la revendication 1 ou 2, **caractérisé en ce que** le gaz restant est comprimé dans un réservoir intermédiaire (24) et **en ce que** le nouveau remplissage du deuxième réservoir d'extermination de vermine avec du gaz de traitement est décalé dans le temps après le déchargement et le chargement du premier réservoir d'extermination de vermine.

5. Dispositif de réalisation d'un procédé suivant l'une des revendications 1 à 4, **caractérisé en ce que** les réservoirs d'extermination de vermine (2, 4) sont logés dans un réservoir (40) rempli de gaz de traitement à pression ambiante avec une ouverture de déchargement/chargement (44) à la partie supérieure.

6. Dispositif de réalisation d'un procédé suivant l'une des revendications 1 à 4, **caractérisé en ce que** les réservoirs d'extermination de vermine (2, 4) sont installés avec une orientation au moins partiellement verticale de leur axe longitudinal et ont leurs ouvertures de déchargement/chargement à leur extrémité supérieure.

7. Dispositif suivant l'une des revendications 5 ou 6, **caractérisé en ce qu'**un réservoir intermédiaire (24) pour le gaz de traitement est installé en aval du compresseur (20), des tuyauteries d'alimentation (6, 8) verrouillables à l'aide de vannes (7, 9) conduisant de celui-ci aux réservoirs d'extermination de vermine (2, 4).

8. Dispositif suivant la revendication 7, **caractérisé en ce qu'**une tuyauterie de dérivation (28) est prévue pour contourner le réservoir intermédiaire (24).

9. Dispositif suivant l'une des revendications 5 à 8, **caractérisé en ce qu'**un réservoir de stockage (38) pour gaz de traitement peut être raccordé aux tuyauteries d'alimentation (6, 8) pour le premier remplissage et la compensation des fuites.
